# EUROPÄISCHE PATENTSCHRIFT

(11) **EP 3 507 146 B1**
(45) Veröffentlichungstag und Bekanntmachung des Hinweises auf die Patenterteilung: **24.02.2021**
(21) Anmeldenummer: 17771353.4
(22) Anmeldetag: 05.09.2017
(51) Int. Cl.: B60R 25/20

(54) **VERFAHREN ZUR ZUGRIFFSKONTROLLE AUF FUNKTIONEN EINES KRAFTFAHRZEUGES**
METHOD FOR ACCESS CONTROL TO FUNCTIONS OF A MOTOR VEHICLE
PROCÉDÉ POUR LE CONTRÔLE D'ACCÈS À DES FONCTIONS D'UN VÉHICULE AUTOMOBILE

(30) Priorität: 26.10.2016 DE 102016120463
(43) Veröffentlichungstag der Anmeldung: 10.07.2019
(73) Patentinhaber: Huf Hülsbeck & Fürst GmbH & Co. KG, 42551 Velbert (DE)
(72) Erfinder: SCHINDLER, Mirko, 42549 Velbert (DE)
(74) Vertreter: Zenz Patentanwälte Partnerschaft mbB
(86) Internationale Anmeldenummer: PCT/EP2017/072252
(87) Internationale Veröffentlichungsnummer: WO 2018/077516

(56) Entgegenhaltungen:
- EP-A1- 3 064 404
- WO-A1-2014/108363
- WO-A2-2016/038294
- CN-A- 104 648 321
- JP-A- 2003 174 674

## Beschreibung

Die Erfindung betrifft ein Verfahren zur Zugriffskontrolle auf Funktionen eines Kraftfahrzeuges. Das erfindungsgemäße Verfahren ist für Kraftfahrzeuge geeignet, die eine Mehrzahl von Hochfrequenz-Sende-Empfangsstationen an ortsverschiedenen Positionen des Kraftfahrzeuges aufweisen. Von einem Benutzer wird für die Zugangsautorisierung am Fahrzeug eine mobile, tragbare Zugangseinrichtung zum Datenaustausch mit den Hochfrequenz-Sende-Empfangsstationen mitgeführt. Außerdem ist am Fahrzeug wenigstens eine Sensoreinrichtung zur Erfassung einer Betätigung durch einen Benutzer festgelegt.

Im Stand der Technik sind zahlreiche Zugangssysteme für Kraftfahrzeuge bekannt, insbesondere sogenannte Keyless-Entry oder Keyless-Go Systeme. Bei diesen Systemen werden portable Fahrzeugschlüssel sonstige ID-Geber vom Benutzer mitgeführt und können über eine Funkkommunikation Authentifizierungsdaten an eine Steuereinrichtung im Fahrzeug senden, um die Berechtigung zum Zugang oder Starten des Fahrzeuges nachzuweisen. Wesentlich für solche Systeme ist dabei oft die Bestimmung der Position eines Benutzers, der den berechtigten Fahrzeugschlüssel mit sich führt. Dafür weisen herkömmliche Systeme häufig Signalübertragungen im Niederfrequenzbereich um 125 kHz auf, da bei diesen Frequenzen eine reichweitenabhängige Ansteuerung von Empfängern im Fahrzeugschlüssel oder ID-Geber kontrollierbar ist. Es ist mit solchen Systemen möglich, bei Anordnung einer entsprechenden Antenne im Türgriff oder an sonstiger Position an der Außenhaut des Fahrzeuges, die Ansteuerung eines zugehörigen Fahrzeugschlüssels auf einen Bereich von einigen Metern zu begrenzen, so dass tatsächlich nur dann einer Fahrertür des Fahrzeuges geöffnet werden kann, wenn sich der Benutzer mit dem berechtigten Schlüssel neben der Fahrzeugtür aufhält.

Eine wachsende Bedeutung gewinnen jedoch auch Kommunikationsgeräte wie Smartphones oder tragbare Computer als Zugangsmittel für Fahrzeuge. Diese mobilen Kommunikationseinrichtungen ersetzen zunehmend die herkömmlichen Fahrzeugschlüssel. Während grundsätzlich eine Datenübertragung über standardisierte Schnittstellen, beispielsweise Bluetooth-Schnittstellen, zwischen Fahrzeug und tragbaren Zugangseinrichtungen wie Smartphones oder mobilen Computern etabliert ist, ist die Positionsbestimmung bei derartig hochfrequentem Signalaustausch problematisch.

Das Dokument WO 2014/108363 offenbart ein Verfahren zur Nutzung eines Mobiltelefons mit NFC (Near Field Communication) als Zugangsmittel. Angesichts der äußerst kurzen Reichweite von NFC-Verbindungen ist hierbei die Positionsbestimmung obsolet, da sich das Mobiltelefon in unmittelbarer Nähe des Empfängers befinden muss.

Da herkömmliche Mobiltelefone regelmäßig keine Empfangseinrichtungen für niederfrequente Signale aufweisen, wird die Positionsbestimmung ebenfalls über hochfrequente Signale durchgeführt. Im Falle der Verwendung eines Bluetooth-Standards liegen diese Frequenzen bei 2,4 GHz bis 2,48 GHz, also innerhalb des 2,4 GHz ISM-Frequenzbandes. In diesem Frequenzband gibt es, je nach Sendestärken, verschiedene Klassen mit unterschiedlichen Reichweiten.

In der Vergangenheit gab es unterschiedliche Ansätze, die Informationen bei dem Signalaustausch gemäß einem Hochfrequenzstandard, insbesondere dem Bluetooth-Standard zur Positionsbestimmung zu verwenden. Beispielsweise offenbart das Dokument "A COMPREHENSIVE STUDY OF BLUETOOTH SIGNAL PARAMETERS FOR LOCALIZATION, A. K. M. Maasahtab Hossain and Wee-Seng Soh, The 18th Annual IEEE International Symposium on Personal, Indoor and Mobile Radio Communications (PIMRC'07) mögliche Parameter für die Bestimmung einer relativen Position und deren Abstandsabhängigkeit.

Es ist jedoch bekannt, dass die Distanzabhängigkeit aufgrund der deutlich höheren Frequenzen und geringeren Wellenlängen und den damit verbundenen Schirmungs-, Beugungs- und Reflexionseffekten problematischer ist als bei Niederfrequenzsignalen.

Der Erfindung liegt die Aufgabe zugrunde, ein Fahrzeugsystem mit Hochfrequenz-Sende-Empfangsstationen so zu verwenden, dass eine vorteilhafte und verbesserte Lokalisierung einer vom Benutzer mitgeführten Zugangseinrichtung möglich wird.

Die Aufgabe wird gelöst durch ein Verfahren mit den Merkmalen des Patentanspruches 1.

Wie Eingangs gesagt, ist das Verfahren an Kraftfahrzeugen einsetzbar, die grundsätzlich eine ursprünglich vorhandene oder nachgerüstete Kommunikationskompatibilität für eine Hochfrequenzkommunikation bereitstellen. Beispielsweise können dazu mehrere Hochfrequenz-Sende-Empfangsstationen an ortsverschiedenen Positionen eines Fahrzeuges angebracht werden. Dazu gibt es beispielsweise sogenannte Bluetooth-Satelliten, die im Fahrzeug verteilt angeordnet werden und Sende-Empfangsfunktionen übernehmen. Alternativ kann das Fahrzeug bereits bei seiner Herstellung an verschiedenen Positionen Bluetooth-Sendeempfänger aufweisen. Regelmäßig sind diese beispielsweise schon für eine drahtlose Kopplung für Freisprechfunktionen vorhanden.

Neben solchen Stationen weisen Fahrzeuge außerdem an verschiedenen Stellen und zu anderen Zwecken Sensoreinrichtungen auf, die eine Betätigung durch einen Benutzer erlauben. Diese Sensoreinrichtungen können beispielsweise kapazitive oder mechanische Sensoren in den Außentürgriffen oder einer Heckklappe sein oder auch die Bedieneinrichtungen im Innenraum des Fahrzeuges.

Erfindungsgemäß werden die Funktionen der am Fahrzeug ortsfest angeordneten Sensoreinrichtungen und die HochfrequenzKommunikation verknüpft, um eine Einmessung der Positionsbestimmung anhand der bekannten Position der Sensoreinrichtung vorzunehmen. Wird also eine ortsfeste Sensoreinrichtung betätigt, wird dadurch die Aufenthaltsposition eines Bedieners eingeschränkt und kann für eine Einmessung oder Kalibrierung der Hochfrequenzbasierten Positionsbestimmung herangezogen werden.

Wird beispielsweise eine Außengriffanordnung einer Tür betätigt, so ist zur Freigabe der Türschlosseinrichtung erforderlich, dass der Aufenthalt des Benutzers mit der berechtigten Zugangseinrichtung (beispielsweise seinem per Bluetooth mit dem Fahrzeug gekoppelten Smartphones) sich außerhalb des Fahrzeuges in diesem Bereich aufhält. Wird hingegen die Motor-Starttaste im Innenraum des Fahrzeuges betätigt, so ist ein Aufenthalt des Benutzers mit seiner Zugangseinrichtung im Innenraum zu verifizieren.

Gemäß dem erfindungsgemäßen Verfahren wird die Betätigung der Sensoreinrichtung überwacht und bei Erfassung der Betätigung wird zwischen wenigstens einer der Hochfrequenz-Sende-Empfangsstationen des Fahrzeuges und der tragbaren Zugangseinrichtung eine Signalverbindung etabliert. Bei dieser Signalverbindung wird wenigstens ein erster Signalparameter ermittelt, wobei die Ermittlung in der ersten Hochfrequenz-Sende-Empfangsstation erfolgt. Dieser wenigstens eine Signalparameter wird in Zuordnung zu der zugehörigen ersten Hochfrequenz-Sende-Empfangsstation und dem Ort der Sensoreinrichtung als Referenz-Signalparameter im Speicher im Fahrzeug hinterlegt.

Die Erfindung macht sich zu Nutze, dass die Position der Sensoreinrichtung am Fahrzeug bekannt ist und der Benutzer sich in unmittelbarer Nähe der Sensoreinrichtung befinden muss, um diese zu betätigen. Es wird also vorausgesetzt, dass der legitime Benutzer die Sensoreinrichtung betätigt und ein Signalparameter bei der Verbindung zwischen der mobilen Zugangseinrichtung und dem Fahrzeug wird erfasst. Dieser Signalparameter dient einem Einmessen des Systems für den konkreten Benutzungsfall und für die in kurzen Zeitabständen darauffolgende weitere Betätigung.

Nähert sich beispielsweise ein Benutzer mit seiner mobilen Zugangseinrichtung (z.B. seinem Smartphone) dem Fahrzeug und betätigt den äußeren Türgriff der Fahrertür, so wird in diesem Moment eine Signalverbindung zwischen der vom Benutzer mitgeführten mobilen Zugangseinrichtung mit dem Fahrzeug etabliert. Gegebenenfalls besteht bereits zu diesem Zeitpunkt eine Verbindung, falls das Smartphone sich automatisch mit dem in Reichweite befindlichen Fahrzeug koppelt. Unter dem Begriff des "Etablierens" einer Verbindung ist entsprechend auch der Signalaustausch bei einer bereits vorhandenen Kopplung zu verstehen.

Der ermittelte Signalparameter ist ein solcher Parameter, welcher für die Qualität der Verbindung repräsentativ ist und mit dem Abstand von Sender zu Empfänger variiert. Dieser Signalparameter wird zum Einmessen der Einrichtung verwendet. Wie oben bereits beschrieben, ist die Qualität einer Hochfrequenzverbindung nicht nur stark abhängig von dem Abstand zwischen Sender und Empfänger, sondern auch davon, wie Sender und Empfänger zueinander orientiert sind und welche Schirmungen und Reflektionen auftreten. Trägt ein Benutzer beispielsweise seine Zugangseinrichtung (zum Beispiel Smartphone oder tragbaren Computer) in der Gesäßtasche, schirmt sein Körper die Einrichtung gegenüber dem Fahrzeug ab. Trägt er die Zugangseinrichtung jedoch in der Hand- oder in der Brusttasche, ist diese Abschirmung deutlich geringer. Durch den Raumbezug der Sensoreinrichtung, welche die Gegenwart des Benutzers örtlich festlegt, kann der Einmessvorgang eine Referenz bilden, die zur Auswertung der weiteren Signale verwendet werden kann, insbesondere für die Erkennung, ob sich ein Benutzer im Innenraum des Fahrzeuges oder im Außenraum befindet. Trägt der Benutzer beispielsweise die Zugangseinrichtung in seiner Gesäßtasche, wird der Signalparameter eine schlechtere Verbindungsqualität anzeigen als wenn der Benutzer das Zugangsgerät in der Hand trägt und in die unmittelbare Nähe des Fahrzeuges bringt. Diese Kalibrierungswerte oder Einmesswerte können anschließend verwendet werden, wenn der Benutzer in den Innenraum des Fahrzeuges eintritt und dort beispielsweise die Motorstarttaste betätigt. Es wird dann davon ausgegangen, dass die beim Einmessen ermittelte Verbindungsqualität, repräsentiert durch den Signalparameter, sich auch in der Verbindungsqualität im Innenraum wiederspiegelt, so dass die Erwartungswerte für die Innenraum/Außenraum-Erkennung der Signalstärken angepasst werden können.

Als Signalparameter können beliebige geeignete Parameter, insbesondere RSSI-Werte, RX-Werte, LQ-Werte herangezogen werden.

Erfindungsgemäß sieht das Verfahren vor, nach diesem Einmessvorgang eine nachgeordnete Initiierung wenigstens einer weiteren Signalverbindung zwischen wenigstens einer der Hochfrequenz-Sende-Empfangsstationen und der tragbaren Zugangseinrichtung vorzunehmen. Dieses nachgeordnete Initiieren erfolgt insbesondere dann, wenn eine weitere Betätigung am Fahrzeug erfolgt, beispielsweise die Betätigung einer Starttaste oder einer sonstigen Funktion im Innenraum des Fahrzeuges. Dann wird wiederum eine Signalverbindung zwischen der Zugangseinrichtung des Benutzers und einer der Hochfrequenz-Sende-Empfangsstationen etabliert (was auch umfasst, dass ein Signalaustausch bei bestehender Verbindung vorgenommen wird) und es wird der weitere Signalparameter für einen Vergleich mit dem Referenzsignalparameter ermittelt. In Abhängigkeit von diesem Referenzvergleich und dem aktuellen Signalparameter kann eine Positionsbestimmung gegenüber dem Fahrzeug erfolgen, insbesondere eine Erkennung des Aufenthalts im Innenbereich des Fahrzeuges oder im Außenbereich des Fahrzeuges des Benutzers mit seiner Zugangseinrichtung.

Entsprechend kann nach Auswertung der Position die Freigabe oder Sperrung der angeforderten Fahrzeugfunktion erfolgen.

Die Erfindung sieht also vor, die Betätigung einer Sensoreinrichtung am Fahrzeug, die ortsfest und an bekannter Position am Fahrzeug festgelegt ist, mit einer zeitgleichen oder gering verzögerten Einmessung einer Hochfrequenzkommunikation zu koppeln. Dieser Einmesswert/Referenzwert wird in den darauffolgenden Auswertungen weiterer Signalverbindungen verwendet, um eine Position des Nutzers mit der Zugangseinrichtung eingrenzen oder berechnen zu können.

Unter Berechnung der Position ist in diesem Zusammenhang auch zu verstehen, dass eine Wahrscheinlichkeitsabschätzung für den Aufenthalt des Benutzers vorgenommen wird, also keine quantitative, sondern eine qualitative Positionsbestimmung (zum Beispiel Innenbereich/Außenbereich) vorgenommen wird.

Es stehen gemäß dem erfindungsgemäßen Verfahren aktualisierbare Referenzwerte und Einmesswerte zur wiederholten und bedarfsgemäßen Kalibrierung des Systems zur Verfügung, da grundsätzlich bei Betätigung der ortsfesten Sensoreinrichtung immer wieder neue Referenzwerte generiert werden können.

Gemäß einer Weiterbildung der Erfindung werden bei Feststellung der Betätigung der ersten Sensoreinrichtung mehrere Signalverbindungen von unterschiedlichen Hochfrequenz-Sende-Empfangsstationen des Fahrzeuges zu der tragbaren Zugangseinrichtung initiiert.

Zu jeder der Mehrzahl der Hochfrequenz-Sende-Empfangsstationen wird wenigstens ein Signalparameter ermittelt und als Referenz-Signalparameter in Zuordnung zu dieser Hochfrequenz-Sende-Empfangsstation gespeichert. In einer nachfolgenden Signalverbindung wird wenigstens eine Verbindung zwischen einer der genannten, zuvor eingemessenen Hochfrequenz-Sende-Empfangseinrichtungen und der tragbaren Zugangseinrichtung hergestellt und es erfolgt ein Vergleich eines dann nachfolgend ermittelten Signalparameters mit dem gespeicherten Referenzsignalparameter der zugehörigen Hochfrequenz-Sende-Empfangsstation.

Die Einbeziehung mehrerer Hochfrequenz-Sende-Empfangsstationen macht das Verfahren noch zuverlässiger und erlaubt es, das Ergebnis einer Auswertung gegebenenfalls durch Wertevergleiche und Berechnungen unterschiedlicher Signalverbindungen und Wertevergleiche zu verifizieren. Die Präzision und Zuverlässigkeit der Ortsbestimmung wird damit erhöht.

In einer bevorzugten Gestaltung wird als Signalparameter ein Parameter einer Bluetooth-Hochfrequenzverbindung herangezogen, welcher ein Maß für die Signalqualität oder Signalstärke der zugehörigen Signalverbindung ist.

In gängigen Bluetooth-Verbindungen werden verschiedene Signalparameter verwendet, um eine Signalqualität zu bestimmen. Beispielsweise gibt es den sogenannten Parameter der Link Quality (LQ) welcher beispielsweise ein standardisierter Parameter gemäß dem Bluetooth-Standard ist. Weitere Parameter sind beispielsweise der RSSI-Wert (Received Signal Strength Indicator) oder auch der Transmit Power Level (TPL). Alle diese Parameter weisen eine gewisse Abstandsabhängigkeit und Abhängigkeit von der Verbindungsqualität auf.

Da diese Signalparameter standardisiert in Protokollen der Bluetooth-Kommunikation vorkommen, ist die Erfindung mit diesen Methoden besonders einfach umzusetzen.

Vorzugsweise ist eine Sensoreinrichtung in einem äußeren Fahrzeuggriff des Fahrzeuges angeordnet, die gemäß dem erfindungsgemäßen Verfahren als erste Sensoreinrichtung verwendet wird. Die Betätigung des Fahrzeuggriffes stellt häufig die erste mechanische Wechselwirkung mit einem Fahrzeug bei Benutzungsaufnahme dar und erfordert die körperliche Nähe eines Benutzers zum Fahrzeug. Außerdem nehmen die Benutzer regelmäßig gleichartige und wiederkehrende Positionen zur Betätigung einer Fahrzeugtür ein, so dass sich diese Position besonders für die Einmessung des Systems gemäß dem erfindungsgemäßen Verfahren eignet. Als Sensoreinrichtung in den Türgriffen können die herkömmlichen Systeme, insbesondere kapazitive Annäherungserfassungen verwendet werden.

In diesem Fall ist keine wesentliche bauliche Änderung der bestehenden Keyless-Entry Systeme erforderlich, die Signale der kapazitiven Erfassungen können vom Steuersystem des Fahrzeuges als Trigger für eine Einmessung des Systems verwendet werden.

In einer Weiterbildung des erfindungsgemäßen Verfahrens ist vorgesehen, dass die im Speicher des Fahrzeuges gespeicherten Referenzsignalparameter nach Ablauf einer vorgegebenen Zeitdauer gelöscht werden.

Um das Verfahren in seiner vorteilhaften Wirkung zu nutzen, ist die erneuerte und aufgefrischte Einmessung des Systems erforderlich. Da ein Benutzer seine tragbare Zugangseinrichtung (beispielsweise sein Smartphone) in unterschiedlichen Lebenssituationen in unterschiedlicher Transportweisen mit sich führt, kann eine Löschung der Referenzwerte nach Ablauf einer vorgegebenen Zeitspanne und ggf. der Rückgriff auf Standardwerte sinnvoll sein. Beispielsweise kann vorgesehen werden, dass die Referenzwerte nach einigen Minuten, beispielsweise fünf Minuten gelöscht werden. Innerhalb dieser Zeit hat der Benutzer üblicherweise den Fahrgastraum betreten und beispielsweise im Innenraum eine Betätigung des Zündschalters vorgenommen, welcher wiederum eine neue Messung der Signalverbindung unter Rückgriff auf die Referenzwerte triggert. Betätigt der Fahrer bei Beendigung der Fahrt erneut den Zündschalter, kann wiederum eine Einmessung des Systems erfolgen, welche nach dem Ausstieg des Fahrers zum Vergleich mit den dann erfassten Werten bei Anforderung der Fahrzeugverrieglung am Außentürgriff herangezogen wird.

In einer bevorzugten Ausführungsform der Erfindung wird das erfindungsgemäße Verfahren zu einer qualitativen Positionsbestimmung genutzt, insbesondere einer Innenraum-Außenraumbestimmung des Benutzers. Wie vorstehend ausgeführt, ist eine besonders präzise Positionsbestimmung im Bereich der Hochfrequenzkommunikation anhand eines Parameters nur schwer möglich. Die qualitative Bestimmung hinsichtlich Innenraum und Außenraum ist aufgrund der erheblichen Schirmungswirkung der Außenhaut eines Fahrzeuges regelmäßig deutlich leichter zu bewerkstelligen. Dies liegt daran, dass die Qualitätsunterschiede im Innenraum und Außenraum bei einer Signalverbindung stark voneinander abweichen. Wird hier das erfindungsgemäße Verfahren zum Einmessen im Außenraum oder Innenraum des Systems verwendet, ist ein besonders verlässlicher Bezugswert gegeben, der zum Vergleich mit einer Signalverbindung im Innenraum bzw. Außenraum herangezogen werden kann.

Vorzugsweise wird dann eine weitere Signalverbindung zwischen dem mobilen Zugangsmittel und den Hochfrequenzsende-Empfangseinrichtungen im Fahrzeug initiiert, wenn ein Betätigungselement im Innenraum des Fahrzeugs betätigt wird. Dies Betätigungselement kann insbesondere der Zünd-Startschalter sein. In dieser Ausführungsform wird also ein Einmessen des Systems beispielsweise bei Betätigung des Türgriffs vorgenommen, wobei ein erster Signalparameter, beispielsweise bezüglich der RSSI-Werte, als Referenzwert abgespeichert wird. Der Benutzer öffnet daraufhin die Tür, setzt sich in das Fahrzeug und betätigt den Zünd-Startschalter, woraufhin eine weitere Signalverbindung zwischen der mobilen Zugangseinrichtung und dem Hochfrequenzsende-Empfangseinrichtungen initiiert wird. Die dann bestimmten RSSI-Werte der Verbindung müssen erheblich größer sein als die bei der zuvor vorgenommenen Einmessung bestimmten Werte. Insbesondere kann hier ein Faktorenvergleich vorgenommen werden, also bestimmt werden, ob der Einmesswert um einen bestimmten vorgegebenen RSSI-Wert unterhalb des später ermittelten RSSI-Wertes liegt oder um einen bestimmten Faktor davon abweicht.

Grundsätzlich kann das erfindungsgemäße Verfahren mit beliebigen Hochfrequenzkommunikationsstandards (zum Beispiel Wi-Fi oder Bluetooth) umgesetzt werden, in einer bevorzugten Gestaltung wird jedoch als Hochfrequenz-Signalverbindung der Bluetooth-Standard verwendet. Dieser Standard wird von zahlreichen mobilen Zugangsgeräten umgesetzt und ist hinsichtlich der erforderlichen Bauteilgruppen etabliert und kostengünstig verfügbar.

Die Erfindung wird nun anhand der beiliegenden Zeichnungen näher erläutert.
Figur 1 zeigt schematisch ein Szenario zum Einsatz des erfindungsgemäßen Verfahrens;
Figur 2 zeigt ein Ausführungsbeispiel in Gestalt eines Ablaufdiagramms für das erfindungsgemäße Verfahren.

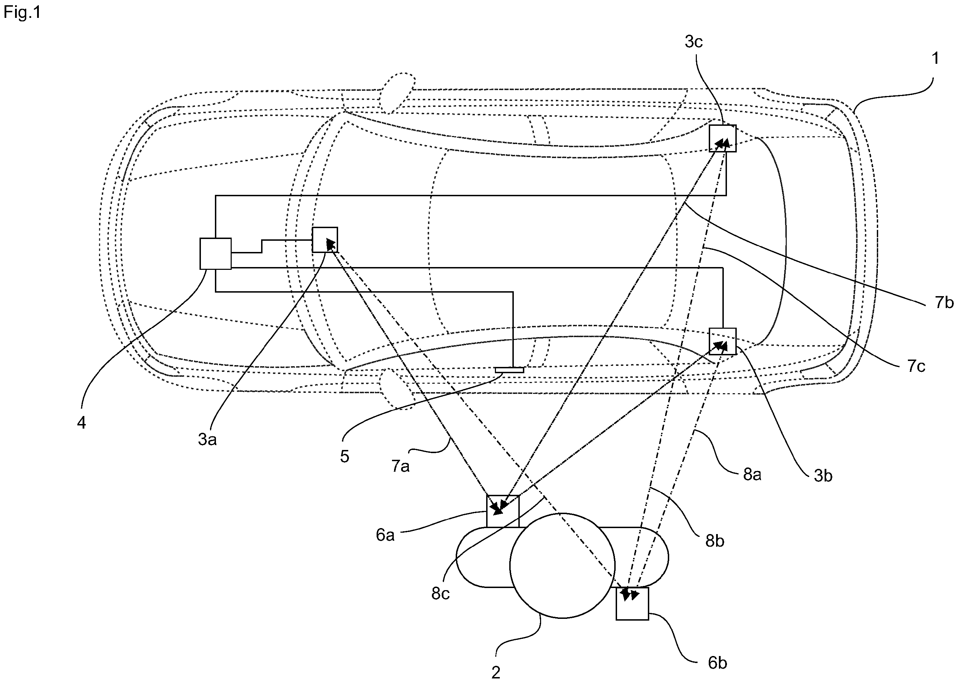

In Figur 1 ist ein Kraftfahrzeug 1 dargestellt, dem sich ein Benutzer 2 nähert. In dem Kraftfahrzeug 1 sind mehrere Hochfrequenz-Sende-Empfangsstationen 3a, 3b, 3c ausgebildet und an beabstandeten Positionen innerhalb des Fahrgastraumes des Fahrzeuges 1 angeordnet. Es handelt sich bei den Hochfrequenz-Sende-Empfangsstationen in diesem Ausführungsbeispiel um Bluetooth-Satelliten, die mit einer zentralen Steuereinrichtung 4 in dem Kraftfahrzeug gekoppelt sind. In der Abbildung der Figur 1 sind leitungsgebundene Kopplungen der Hochfrequenz-Sende-Empfangsstationen mit der Steuereinrichtung 4 gezeigt. Grundsätzlich ist es jedoch auch möglich, dass die Kopplung zwischen den Hochfrequenz-Sende-Empfangsstationen 3a, 3b, 3c und der zentralen Steuereinrichtung 4 drahtlos erfolgt. Die zentrale Steuereinrichtung 4 ist außerdem mit der Sensoreinrichtung 5 gekoppelt, die im Türgriff der Fahrertür angeordnet ist. Ein Benutzer 2 kann die Sensoreinrichtung 5 betätigen, indem er seine Hand an den Türgriff legt oder diesen umfasst. Dann signalisiert die Sensoreinrichtung 5 der zentralen Steuereinrichtung 4 die Annäherung des Benutzers, der sich dann in einer räumlich eingegrenzten Position um die Sensoreinrichtung 5 befindet. Wird die Betätigung der Sensoreinrichtung 5 erfasst, steuert die zentrale Steuereinrichtung die Hochfrequenz-Sende-Empfangsstationen 3a, 3b, 3c an, um Kontakt mit einer mobilen Zugangseinrichtung aufzunehmen, die vom Benutzer mitgeführt wird. In dem gezeigten Schema führt der Benutzer 2 in einer ersten Alternative ein Smartphone 6a in der Brusttasche mit sich. Gemäß einer zweiten Alternative befindet sich ein Smartphone 6b in der Gesäßtasche des Benutzers 2. Die Smartphones 6a und 6b sind also alternative Anordnungen der mobilen Zugangseinrichtung, der Benutzer trägt also entweder das Smartphone 6a an der Vorderseite seines Körpers oder das Smartphone 6b an der Hinterseite seines Körpers mit sich. Die Smartphones 6a, 6b sind ausgebildet, um Kommunikationsverbindungen gemäß dem Bluetooth-Standard mit den Hochfrequenz-Sende-Empfangsstationen 3a, 3b und 3c zu etablieren. Für den Fall, dass der Benutzer das Smartphone 6a mit sich führt, werden bei einer durch die Sensoreinrichtung 5 getriggerten Einmessung des Systems Signalverbindungen etabliert, welche durch die Pfeile 7a, 7b und 7c dargestellt sind. Die Signalverbindungen werden durch den Körper des Benutzers 2 kaum geschwächt, so dass die ermittelten Signalparameter, welche eine Signalstärke der Verbindungen angeben, jeweils erste Referenzwerte für eine hohe Verbindungsqualität ergeben. Diese Signalstärke-Referenzwerte werden, den jeweiligen Hochfrequenz-Sende-Empfangsstationen 3a, 3b und 3c und dem Ort der Sensoreinrichtung 5 zugeordnet, im Fahrzeug gespeichert. Trägt hingegen der Benutzer das Smartphone 6b in seiner Gesäßtasche mit sich, werden Signalverbindungen 8a, 8b und 8c etabliert, die durch den Benutzer selbst gegenüber dem Fahrzeug stark abgeschirmt werden. Es werden dann niedrigere Qualitätswerte für die Signalverbindungen, insbesondere RSSI-Werte als Referenzwerte zu den Hochfrequenz-Sende-Empfangsstationen 3a, 3b, 3c gespeichert.

Nimmt der Benutzer nach Öffnung der Tür und nach dem erfolgreichen Einmessvorgang im Innenraum des Fahrzeuges 2 Platz, wird weiterhin von der identischen Position des Smartphones 6a, 6b am Körper des Benutzers ausgegangen. Es wird dann anhand dieser zuvor bestimmten Referenzwerte eine qualitative Bestimmung vorgenommen, ob der Benutzer sich im Innenraum des Fahrzeuges oder im Außenraum aufhält. Dazu erfolgt ein Vergleich mit den zuvor eingemessenen Referenzwerten. Dieser Vergleich erfolgt, wenn der Benutzer 2 im Innenraum des Fahrzeuges eine Funktion anfordert, welche eine Berechtigung erfordert, beispielsweise das Fahrzeug starten möchte. Dann werden erneut Signalverbindungen zwischen dem Smartphone 6a bzw. 6b und den Hochfrequenz-Sende-Empfangsstationen 3a, 3b, 3c aufgebaut und die dann ermittelten aktuellen Werte werden mit den zuvor beim Einmessvorgang außerhalb des Fahrzeuges gespeicherten Referenzwerten verglichen. Auf diese Weise kann eine verlässlichere qualitative Positionsbestimmung vorgenommen werden, als wenn sich das System auf vorgegebene und eingespeicherte, unveränderliche Referenzwerte bezieht, da die aktuelle Lage des Smartphones am Benutzer berücksichtigt werden kann.

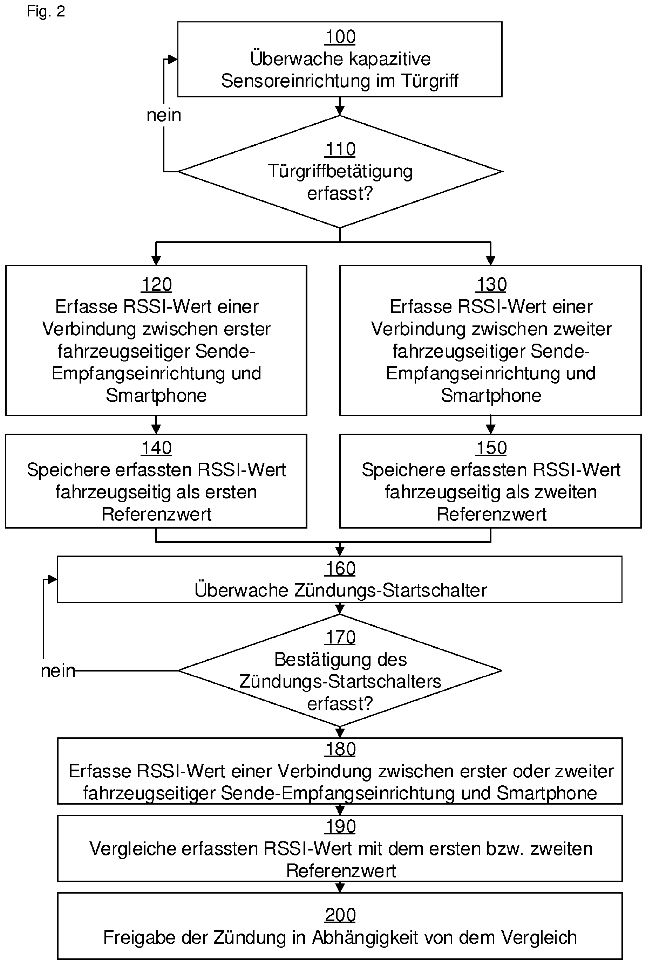

Figur 2 zeigt beispielhaft eine Ausführungsform des erfindungsgemäßen Verfahrens in Gestalt eines Ablaufdiagramms. In Schritt 100 wird eine kapazitive Sensoreinrichtung im Türgriff eines Kraftfahrzeuges überwacht. Bei Schritt 110 wird geprüft, ob eine Türgriffbetätigung erfasst wird. Ist dies nicht der Fall, wird die Überwachung bei Schritt 100 fortgesetzt. Wenn die Türgriffbetätigung erfasst wird, werden in diesem Ausführungsbeispiel mehrere Bluetooth-Verbindungen bei den Schritten 120 und 130 von unterschiedlichen Bluetooth-Satelliten im Fahrzeug, die als Hochfrequenz-Sende-Empfangsstationen wirken und einem vom Benutzer mitgeführten Smartphone etabliert. Zu jeder der Verbindungen wird bei den Schritten 140 und 150 jeweils ein Referenzwert eines RSSI-Wertes der Signalverbindung gespeichert. Anschließend wird für eine vorgegebene Zeitdauer, in diesem Beispiel fünf Minuten, der Zündungs-Startschalter bei Schritt 160 überwacht. Bei Schritt 170 wird entschieden, ob eine Betätigung des Zündungs-Startschalters erfasst wurde. Ist dies nicht der Fall, wird die Überwachung des Zündungs-Startschalters fortgesetzt. Wird jedoch eine Betätigung des Zündungs-Startschalters erfasst, wird bei Schritt 180 erneut ein RSSI-Wert einer Verbindung mit wenigstens einer der zuvor bei den Schritten 120 oder 130 einbezogenen fahrzeugseitigen Sende-Empfangseinrichtungen und dem Smartphone etabliert. Bei Schritt 190 wird ein Vergleich des dann erfassten aktuellen RSSI-Wertes mit dem zugehörigen Referenzwert vorgenommen. In Abhängigkeit von dem Ergebnis des Vergleichs wird bei Schritt 200 die Zündung freigegeben oder gesperrt. Der Vergleich kann insbesondere beinhalten, dass der bei Betätigung des Zündungs-Startschalters ermittelte RSSI-Wert den zuvor ermittelten Referenzwert der zugehörigen fahrzeugseitigen Sende-Empfangseinrichtung um einen bestimmten Schwellwert übersteigen muss oder ein bestimmtes Vielfaches davon betragen muss.

Durch die Einbeziehung der Einmessvorgänge an der definierten Position des Fahrzeuges, in diesem Fall im Bereich der äußeren Fahrertür, kann eine wesentlich verlässlichere Aussage bezüglich der Position des Benutzers vorgenommen werden, da die Einmessung unter Voraussetzung einer bekannten Position des Benutzers gegenüber dem Fahrzeug erfolgen kann.

## Patentansprüche

1. Verfahren zur Zugriffskontrolle auf Funktionen eines Kraftfahrzeugs (1),
wobei das Kraftfahrzeug (1) eine Mehrzahl von Hochfrequenz-Sende-Empfangsstationen (3a, 3b, 3c) an ortsverschiedenen Positionen aufweist,
wobei eine mobile, von einem Benutzer (2) tragbare Zugangseinrichtung (6a; 6b) zum Datenaustausch mit den Hochfrequenz-Sende-Empfangsstationen (3a, 3b, 3c) ausgebildet ist,
wobei wenigstens eine erste Sensoreinrichtung (5) zur Erfassung einer Betätigung durch einen Benutzer (2) ortsfest am Fahrzeug angeordnet ist,
wobei das Verfahren die Schritte aufweist:
Überwachen einer Betätigung der Sensoreinrichtung (5) und Initiieren wenigstens einer ersten Signalverbindung (7a, 7b, 7c; 8a, 8b, 8c) zwischen wenigstens einer ersten der Hochfrequenz-Sende-Empfangsstationen (3a, 3b, 3c) und der tragbaren Zugangseinrichtungen (6a; 6b) bei Erfassung der Betätigung,
Ermitteln wenigstens eines ersten Signalparameters der wenigstens einen ersten Signalverbindung in der ersten Hochfrequenz-Sende-Empfangsstation,
Speichern des wenigstens einen ersten Signalparameters in Zuordnung zu der zugehörigen ersten Hochfrequenz-Sende-Empfangsstation (3a, 3b, 3c) und dem Ort der Sensoreinrichtung (5) als Referenz-Signalparameter in einem Speicher im Fahrzeug (1),
Nachgeordnetes Initiieren wenigstens einer weiteren Signalverbindung zwischen wenigstens einer der Hochfrequenz-Sende-Empfangsstationen (3a, 3b, 3c) und der tragbaren Zugangseinrichtung (6a; 6b),
Ermitteln wenigstens eines weiteren Signalparameters der der wenigstens einen weiteren Signalverbindung in einer der Hochfrequenz-Sende-Empfangsstationen (3a, 3b, 3c), wobei der weitere Signalparameter von derselben Art ist wie der erste Signalparameter,
Berechnung einer Position der tragbaren Zugangseinrichtung (6a; 6b) anhand des weiteren Signalparameters und in Abhängigkeit von dem Referenz-Signalparameter und
Freigabe oder Sperrung einer Funktion des Kraftfahrzeugs (1) in Abhängigkeit von der berechneten Position.

2. Verfahren nach Anspruch 1, wobei bei Erfassung der Betätigung der ersten Sensoreinrichtung eine Mehrzahl von Signalverbindungen mit einer Mehrzahl der Hochfrequenz-Sende-Empfangsstationen und der tragbaren Zugangseinrichtungen initiiert werden,
Ermitteln wenigstens eines Signalparameters zu jeder der Signalverbindungen in jeder der zugehörigen Hochfrequenz-Sende-Empfangsstationen,
Speichern der Mehrzahl von Signalparametern in Zuordnung zu der zugehörigen ersten Hochfrequenz-Sende-Empfangsstation und dem Ort der Sensoreinrichtung als Referenz-Signalparameter in einem Speicher im Fahrzeug,
Nachgeordnetes Initiieren wenigstens einer weiteren Signalverbindung zwischen wenigstens einer der Hochfrequenz-Sende-Empfangsstationen und der tragbaren Zugangseinrichtung,
Ermitteln wenigstens eines weiteren Signalparameters der wenigstens einer weiteren Signalverbindung in einer der Hochfrequenz-Sende-Empfangsstationen,
Bestimmung einer Position der tragbaren Zugangseinrichtung anhand der weiteren Signalstärke und in Abhängigkeit von den Referenz- Signalparametern.

3. Verfahren nach Anspruch 1 oder Anspruch 2, wobei der oder die Signalparameter ein Maß für die Signalqualität oder Signalstärke der zugehörigen Signalverbindung angeben.

4. Verfahren nach einem der vorangehenden Ansprüche, wobei als Sensoreinrichtung eine in einem äußeren Fahrzeuggriff angeordnete Sensoreinrichtung verwendet wird.

5. Verfahren nach Anspruch 4, wobei als Sensoreinrichtung eine kapazitive Sensoreinrichtung verwendet wird, mit der eine Annäherung eines Körperteils eines Benutzers erfasst wird.

6. Verfahren nach einem der vorangehenden Ansprüche, wobei die in dem Speicher gespeicherten Referenz-Signalparameter nach Ablauf einer vorgegebenen Zeitdauer gelöscht werden.

7. Verfahren nach einem der vorangehenden Ansprüche, wobei die Bestimmung der Position der tragbaren Zugangseinrichtung als qualitative Bestimmung des Ortes entweder im Innenraum oder im Außenraum des Kraftfahrzeugs erfolgt, wobei das nachgeordnete Initiieren wenigstens einer weiteren Signalverbindung dann erfolgt, wenn eine Betätigung eines Bedienmittels am Kraftfahrzeug durch einen Benutzer im Innenraum des Fahrzeuges erfasst wird.

8. Verfahren nach Anspruch 7, wobei die Position der tragbaren Zugangseinrichtung dann auf den Innenraum des Kraftfahrzeuges bestimmt wird, wenn die weitere Signalverbindung mit einer der Hochfrequenz-Sende-Empfangsstationen gemäß dem Signalparameter eine Signalstärke aufweist, welche den der jeweiligen Hochfrequenz-Sende-Empfangsstationen zugeordneten gespeicherten Wert des Referenz-Signalparameters um ein vorgegebenes Maß oder einen vorgegebenen Betrag übersteigt.

9. Verfahren nach einem der vorangehenden Ansprüche, wobei die Hochfrequenz-Sende-Empfangsstationen und die mobile Zugangseinrichtung Signalverbindungen gemäß einem Bluetooth-Standard etablieren.

## Claims

1. Method for controlling access to functions of a motor vehicle (1),
wherein the motor vehicle (1) has a plurality of high frequency transceiver stations (3a, 3b, 3c) at different locations,
wherein a mobile access device (6a; 6b), which is portable by a user (2), is adapted to exchange data with the high frequency transceiver stations (3a, 3b, 3c),
wherein at least a first sensor device (5) for detecting an actuation by a user (2) is arranged stationarily on the vehicle,
the method comprising the steps of:
monitoring an actuation of the sensor device (5) and initiating at least a first signal connection (7a, 7b, 7c; 8a, 8b, 8c) between at least a first one of the high frequency transceiver stations (3a, 3b, 3c) and the portable access devices (6a; 6b) upon detection of the actuation,
determining at least one first signal parameter of the at least one first signal connection in the first high frequency transceiver station,
storing the at least one first signal parameter in association with the associated first high frequency transceiver station (3a, 3b, 3c) and the location of the sensor device (5) as a reference signal parameter in a memory located in the vehicle (1),
subordinately initiating at least one further signal connection between at least one of the high frequency transceiver stations (3a, 3b, 3c) and the portable access device (6a; 6b),
determining at least one further signal parameter of said at least one further signal connection in one of said high frequency transceiver stations (3a, 3b, 3c), said further signal parameter being of the same type as said first signal parameter,
calculating a position of the portable access device (6a; 6b) on the basis of the further signal parameter and in dependence on the reference signal parameter, and
enabling or disabling a function of the motor vehicle (1) depending on the calculated position.

2. A method of claim 1, wherein upon detecting actuation of the first sensor device, a plurality of signal connections are initiated with a plurality of the high frequency transceiver stations and the portable access devices,
determining at least one signal parameter to each of the signal links in each of the associated high frequency transceiver stations,
storing the plurality of signal parameters associated with the corresponding first high frequency transceiver station and the location of the sensor device as reference signal parameters in a memory located in the vehicle,
subordinately initiating at least one further signal connection between at least one of the high frequency transceiver stations and the portable access device,
determining at least one further signal parameter of the at least one further signal connection in one of the high frequency transceiver stations,
determining a position of the portable access device using the further signal strength and depending on the reference signal parameters.

3. A method according to claim 1 or claim 2, wherein the signal parameter or parameters indicate a measure of the signal quality or signal strength of the associated signal connection.

4. A method according to any one of the preceding claims, wherein a sensor device arranged in an outer vehicle handle is used as the sensor device.

5. A method of claim 4, wherein the sensing device is a capacitive sensing device that senses an approach of a body part of a user.

6. A method according to any one of the preceding claims, wherein the reference signal parameters stored in the memory are deleted after a predetermined period of time has elapsed.

7. A method according to one of the preceding claims, wherein the determination of the position of the portable access device takes place as a qualitative determination of the location either in the interior or in the exterior of the motor vehicle, wherein the subordinate initiation of at least one further signal connection takes place when an actuation of an operating means on the motor vehicle by a user is detected in the interior of the vehicle.

8. A method of claim 7, wherein the position of the portable access device is assigned to the interior of the motor vehicle when the further signal connection to one of the high frequency transceiver stations according to the signal parameter has a signal strength which exceeds the stored value of the reference signal parameter associated with the respective high frequency transceiver station by a predetermined amount or measure.

9. A method according to any one of the preceding claims, wherein the high frequency transceiver stations and the mobile access device establish signal connections according to a Bluetooth standard.

## Revendications

1. Procède de contrôle de l'accès aux fonctions d'un véhicule à moteur (1),
dans lequel le véhicule à moteur (1) comprend une pluralité de stations émettrices-réceptrices de radiofréquences (3a, 3b, 3c) à différents endroits,
dans lequel un dispositif d'accès mobile (6a ; 6b) portable par un utilisateur (2) est adapté pour échanger des données avec lesdites stations émettrices-réceptrices de radiofréquences (3a, 3b, 3c),
dans lequel au moins un premier dispositif de détection (5) destiné à détecter un actionnement par un utilisateur (2) est disposé de manière fixe sur le véhicule,
le procédé comprenant les étapes de :
surveiller un actionnement desdits dispositifs de détection (5) et initier au moins une première connexion de signal (7a, 7b, 7c ; 8a, 8b, 8c) entre au moins une première desdites stations émettrices-réceptrices de radiofréquence (3a, 3b, 3c) et lesdits dispositifs d'accès portables (6a ; 6b) lors de la détection dudit actionnement,
déterminer au moins un premier paramètre de signal de la première liaison de signal au moins dans la première station émettrice-réceptrice de radiofréquence,
stocker au moins un premier paramètre de signal en association avec la première station émettrice-réceptrice de radiofréquence associée (3a, 3b, 3c) et avec le lieu du dispositif de détection (5) comme paramètre de signal de référence dans une mémoire du véhicule (1),
lancer en aval au moins une autre connexion de signal entre au moins une des stations émettrices-réceptrices de radiofréquences (3a, 3b, 3c) et le dispositif d'accès portable (6a ; 6b),
déterminer au moins un autre paramètre de signal de ladite au moins une autre liaison de signal dans l'une desdites stations émettrices-réceptrices de radiofréquence (3a, 3b, 3c), ledit autre paramètre de signal étant du même type que ledit premier paramètre de signal,
calculer une position du dispositif d'accès portable (6a ; 6b) sur la base du paramètre de signal supplémentaire et en fonction du paramètre de signal de référence, et
Activation ou désactivation d'une fonction du véhicule a moteur (1) en fonction de la position calculée.

2. Procédé selon la revendication 1, dans lequel, lors de la détection de l'actionnement du premier moyen de détection, une pluralité de connexions de signaux sont initiées avec une pluralité de stations émettrices-réceptrices de radiofréquences et de dispositifs d'accès portables,
déterminer au moins un paramètre de signal pour chacune des liaisons de signal dans chacune des stations émettrices-réceptrices de radiofréquences associées,
stocker la pluralité des paramètres du signal en association avec la première station émettrice-réceptrice de radiofréquence associée et avec le lieu du dispositif de détection comme paramètres du signal de référence dans une mémoire du véhicule,
lancer en aval au moins une autre connexion de signal entre au moins une des stations émettrices-réceptrices de radiofréquences et le dispositif d'accès portable,
déterminer au moins un autre paramètre de signal de la ou des autres liaisons de signal dans l'une des stations émettrices-réceptrices de radiofréquences,
déterminer une position du dispositif d'accès portable sur la base de l'intensité du signal supplémentaire et en fonction des paramètres du signal de référence.

3. Procédé de la revendication 1 ou de la revendication 2, dans lequel le ou les paramètres du signal indiquent une mesure de la qualité ou de l'intensité du signal de la liaison de signal associée.

4. Procédé selon l'une des revendications précédentes, dans lequel un dispositif de détection disposé dans une poignée extérieure du véhicule est utilisé comme dispositif de détection.

5. Procédé de la revendication 4, dans lequel le dispositif de détection est un dispositif de détection capacitif utilisé pour détecter une approche d'une partie du corps d'un utilisateur.

6. Procédé selon l'une des revendications précédentes, dans lequel les paramètres du signal de référence stockés dans la mémoire sont effacés après l'écoulement d'une période de temps prédéterminée.

7. Procédé selon l'une des revendications précédentes, dans lequel la détermination de la position de l'appareil d'accès portable a lieu en tant que détermination qualitative du lieu soit à l'intérieur soit à l'extérieur du véhicule à moteur, dans lequel le déclenchement en aval d'au moins une autre liaison de signal a lieu lorsqu'un actionnement d'un moyen de commande sur le véhicule automobile par un utilisateur est détecté à l'intérieur du véhicule.

8. Procédé selon la revendication 7, dans lequel la position du dispositif d'accès portable est déterminée à l'intérieur du véhicule à moteur lorsque la connexion de signal supplémentaire à l'une des stations émettrices-réceptrices de radiofréquence selon le paramètre de signal a une intensité de signal qui dépasse d'une quantité ou d'un degré prédéterminé la valeur mémorisée du paramètre de signal de référence associé à la station émettrice-réceptrice de radiofréquence respective.

9. Procédé selon l'une des revendications précédentes, dans lequel les stations émettrices-réceptrices de radiofréquences et le dispositif d'accès mobile établissent des connexions de signaux selon une norme Bluetooth.
